# EUROPEAN PATENT SPECIFICATION

(11) **EP 3 881 662 B1**
(45) Date of publication and mention of the grant of the patent: **06.12.2023**
(21) Application number: 21163043.9
(22) Date of filing: 17.03.2021
(51) Int. Cl.: A01D 34/00, A01B 69/04, A01G 25/09, A01G 25/16, G05D 1/00

(54) **MOTORIZED ROBOTIC LAWNMOWER**
MOTORISIERTER ROBOTER-RASENMÄHER
TONDEUSE ROBOTIQUE MOTORISÉE

(30) Priority: 17.03.2020 IT 202000005608
(43) Date of publication of application: 22.09.2021
(73) Proprietor: Bernini, Fabrizio, 52021 Bucine - Arezzo (IT)
(72) Inventor: Bernini, Fabrizio, 52021 Bucine - Arezzo (IT)
(74) Representative: Fabbriciani, Simone

(56) References cited:
- EP-A1- 3 434 092
- EP-A1- 3 479 682
- WO-A1-2016/202290
- CN-A- 109 566 065
- US-A1- 2020 015 408

## Description

This invention relates to a motor-driven lawn mower robot, to a method for dispensing and to a process for nebulising a fluid.

The maintenance of lawns is very intense work which requires not only frequent cutting of the lawn at the desired height and the application of fertiliser, the spreading of insecticide and weed killers.

More specifically, the correct maintenance of lawns and private gardens is particularly onerous and, whilst it is true that there are various models of lawn mower robots available on the market which automatically cut the grass, on the other hand, at least with regard to the spreading of herbicides and insecticides, according to the prior art it is possible to carry out manual spraying of insecticides and herbicides or by means of nebulising devices which, fixed at certain points in the lawn area, spray insecticide substances at preset times.

These devices, as well as having an appearance which is not always consistent with the expectations of the owner of the garden or the lawn, have the problem of limiting the relative action to specific areas and at predetermined times, obviously preferably at night-time.

This, on the one hand, causes a considerable concentration of the substance, often toxic, in some areas, whilst in other the areas unwanted insects, such as mosquitoes, are even able to proliferate.

For this reason, where it is possible, these nebulisers must often be removed and shifted to other areas of the garden or lawn, with all the consequent inconveniences.

Very often, fixed supply systems cannot easily be transferred from one area to another of the lawn or garden and, therefore, in the case of modifications, it must be completely disassembled and reinstalled with considerable costs and lengthy relocation times.

At the state of art, a motorized robotic lawnmower is described on EP 3479682 (A1) which, however, it does not guarantee uniform nebulization during the entire working period.

The aim of the invention is to overcome the above-mentioned drawbacks of prior art motor-driven lawn mower robots which allows a more homogeneous spreading of insecticide on the lawn or garden and in a more flexible manner compared with the prior art.

In the context of the above-mentioned purpose, an aim of the invention is to avoid the removal and fitting of insect and weed killing systems, thus avoiding lengthy times and high costs.

Another aim of the invention is to provide a method for dispensing herbicides, insecticides and weed killers which is fully automated and which performs the programmed distribution of substances in a liquid, gaseous or solid form which have a herbicidal, insecticidal and/or weed killing action.

Another aim of the invention is to allow an effective insecticide and/or weed killing action in a fully automatic manner.

Yet another aim of the invention is to provide a motor-driven lawn mower robot, with means which are readily available on the market and using materials of common use, in such a way that the device is economically competitive.

This purpose, as well as these and other aims, which are described in more detail below, are achieved by a motor-driven lawn mower robot according to claim 1, a method according to claim 8 and a process according to claim 9.

The motor-driven lawn mower robot according to the invention comprises, on a load-bearing frame:
movement means powered by motor means by connecting to a control unit;
grass cutting means;
at least one nozzle for supplying the substance to be distributed on a spraying area, connected to at least one containment tank for a first substance to be dispensed and controlled by the above-mentioned control unit;
at least one supply outlet for the tank; and
a geolocation system designed to record data relative to the zones where to deliver the substance to be dispensed, in such a way that the control unit, depending on the data recorded and on the basis of the geolocation information, activates the distribution of the substance to be dispensed at the end of or during the step for cutting the grass.

The substance to be sprayed may be liquid, gaseous or in the solid state, for example in the form of powder.

Preferably, the tank is defined in the load-bearing frame, for example inside the motor-driven lawn mower robot or in a relative end part or, alternatively, for minimising space or as an accessory element, it may be mounted on a separate and autonomous trolley, pulled by the robot.

Advantageously, the control unit is programmable in such a way as to set up a spraying area and/or the frequency of distribution of the substance to be dispensed, so as to allow the user to set up a predetermined weed killing path at predetermined times or to select predetermined spraying zones relative to others.

Advantageously, in order to satisfy the various types of use of the lawn mower robot, making it versatile to the maximum extent, there may be a first and (at least) a second tank for containing a first and a second substance to be dispensed. The tanks are connected to a first and a second supply outlet, respectively, and, at the outlet, to one or more nozzles, depending on the use desired by the user.

More precisely, the Applicant has provided that, if the problem to be resolved involves dispensing different substances in different zones, for example a herbicide and an insecticide or two insecticides of different types and effectiveness, the robot comprises a second tank, this time for containing a second substance different to the first substance, separate from the tank and connected to a respective alternative supply opening and to a respective alternative outlet nozzle for the second substance to be dispensed.

Also in this case, according to a first variant of the motor-driven lawn mower robot the second tank may also be fixed to the load-bearing frame or mounted on a trolley which is separate and autonomous and pulled by the robot.

A third embodiment comprises making an auxiliary tank in communication with the tank and connected to a relative secondary supply outlet. In fact, in order to meet the user's requirements, the Applicant has provided that the auxiliary tank contains a first substance to be mixed with the second substance, for example a concentrate and a dilutant. This may occur if wet powders are used (powders mixed with water which give suspensions in which the active ingredient is dispersed), concentrated suspensions (some insecticides are produced in concentrated liquids, with addition of water and suspensives and alginates, polysaccharides, antifreezes) or concentrated emulsions (which contain the active ingredient dissolved in a solvent which acts as a vector).

According to the invention the robot is equipped with means for nebulising the substance to be dispensed, in such a way that the substance is dispensed in a nebulised form. The nebulising means comprise an ultrasonic vibrations device interposed between the tank and the outfeed nozzle of the substance.

The device advantageously comprises disc-shaped capsules made of ceramic material which work using the piezoelectric principle.

The capsules are positioned at the base of the tank and are actuated by a high-frequency alternating current circuit which emits ultrasonic waves.

In this way, a uniform nebulising is maintained during the entire working period, compensating, by acting on the actuation frequency, the variation of the column of water above the capsule, the battery voltage and the variation of the temperature of the liquid which is gradually heated as the capsules remain switched on, thus increasing the percentage of "atomised" liquid.

The Applicant has perceived that the user of the motor-driven lawn mower robot, due also to the limited dimensions which the tank (or tanks) fixed or connected to the load-bearing frame of the robot, must deal with the problem of frequent refills with all the inconvenience in terms of time and logistics resulting from it. On the other hand, tanks which are too large or heavy could adversely affect the correct operation of the robot.

For this reason, the Applicant overcome this technical problem by providing the robot with activation means, which can be operated by the control unit, to move it towards a refilling station, in such a way that the robot passes from a working step, wherein it is moved for cutting and/or dispensing the insecticide, disinfectant, herbicide or weed killing substance, to a filling step wherein the tank (or tanks) of the robot fill again with the substance.

For this purpose, the robot comprises means for detecting the level of the substance contained in the tank, of per se known type, connected to the control unit, in such a way that the lawn mower robot can proceed to the filling point once activated following the signalling of a predetermined lower threshold level.

The Applicant therefore understood that it is necessary to provide a supply station managed by the same control unit which controls the lawn mower robot.

The station advantageously comprises a column type body designed to be fixed to the ground, supporting at least one container which encloses the reserve substance to be dispensed for refilling at least one tank of the robot. The container is equipped with at least one refilling inlet and at least one valve for dispensing the substance to be dispensed. The valve is controlled for opening and closing by the control unit using activation means, in such a way as to authorise or prevent dispensing of the reserve substance if the robot is, respectively, in the step of refilling the substance to be dispensed or it is during the working step, that is to say, moving for the cutting and/or dispensing of the substance.

The Applicant has provided that the device for refilling the reserve substance to be dispensed for refilling at least one tank of the motor-driven lawn mower robot comprises a container for the reserve substance, equipped with at least one inlet for refilling the reserve substance and at least one valve for dispensing the substance to be dispensed. The dispensing valve is controlled for opening and closing by a lever, in such a way as to - respectively - authorise or prevent the dispensing of the reserve substance. Moreover, the dispensing valve is positioned at a distance L from the lever, so that, upon actuation of the lever, the opening defined in the robot is substantially at the lever, so as to allow, in its open position, the introduction of the reserve substance in the opening of the tank.

The method for dispensing an insecticide, herbicide or weed killer substance in the form of liquid, gas or solid, according to the invention comprises the following steps:
- setting up and recording, on a control unit of a motor-driven lawn mower robot, the data relative to the zones where the substance to be dispensed is to be dispensed,
- geolocating the robot by means of a geolocation system mounted on a load-bearing frame of the robot, in such a way as to identify at least one spraying area,
- moving the robot towards the predetermined spraying area which has been previously identified, by movement means connected to the load-bearing frame of the robot and powered by motor means controlled by a control unit, and
- distributing the substance to be dispensed in that spraying area by means of an outfeed nozzle for the substance to be dispensed, with the nozzle connected to at least one tank defined in the load-bearing frame of the robot and controlled by the control unit. The ultrasonic vibration device comprises capsules made of piezoelectric material positioned at the base of the tank.

Preferably, the insecticide, herbicide or weed killing substance is dispensed after or at the same time as the grass is cut in the spraying area identified previously, by the cutting means connected to the load-bearing frame of the robot.

Advantageously, after reaching the predetermined lower threshold value of the substance contained in the tank and signalled by the detection means, the robot is controlled to move towards a point for refilling the substance to be dispensed, that is to say, towards the refilling device described where, thanks to the activation means, the reserve substance is poured from the container defined in the refilling device to the tank of the robot, until filling has been completed, then restarting the cutting and the dispensing.

Further features and advantages of the invention are more apparent in the detailed description below, with reference to a preferred, non-limiting embodiment of the motor-driven lawn mower robot, illustrated by way of example and without limiting the scope of the invention, with the aid of the accompanying drawings, in which:
Figure 1 shows a first embodiment with the robot 1 moving towards the supply station 10;
Figure 2 shows a variant to the solution illustrated above, in which the robot 101 moves backwards towards the supply station 110.

The above-mentioned drawings show a preferred embodiment of a motor-driven lawn mower robot, according to the invention, which is identified in its entirety with the reference numeral 1 or 101 and which comprises, on a load-bearing frame 2 or 102, four wheels 3 or 103 which constitute the means for moving the robot 1 or 101, powered by motor means (not illustrated) by connection to a control unit (not illustrated); a blade (not shown, positioned on the lower part of the robot 1 or 101 facing the ground) which acts as means for cutting the grass; an outfeed nozzle 5 or 105 of the substance to be dispensed connected to a tank 6 or 106' and/or 106" for containing the substance and controlled by the control unit; at least one supply opening 7 or 107' and/or 107" for the same tank 6 or 106' and/or 106"; and a geolocation system (not illustrated), for example a GPS or a WiFi or WLAN network, of known type, designed to record data relative to the zones where the substance to be dispensed is to be dispensed, in such a way that the control unit, depending on the data recorded and on the basis of the geolocation information, activates the distribution of the substance to be dispensed at the end of or during the step for cutting the grass.

The control unit is programmable in such a way as to be able to set up a spraying area and/or the frequency of distribution of the substance to be dispensed.

This programming is based on an application ("app") for electronic devices known as "tablet" or "smartphone", in such a way as to be more easily ready for interaction with the user.

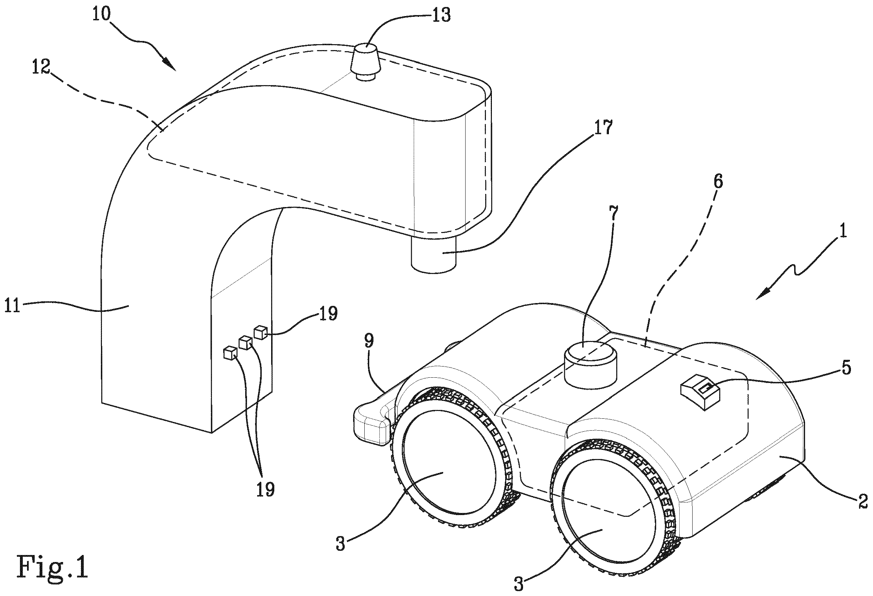

In Figure 1, the robot 1 comprises a tank 6 inside the frame 2 (dashed line) connected to an outfeed nozzle 5 for the substance to be dispensed, an anti-mosquito product, and supplied from a containment tank 6 for the anti-mosquito product. The tank 6 has a refilling opening 7.

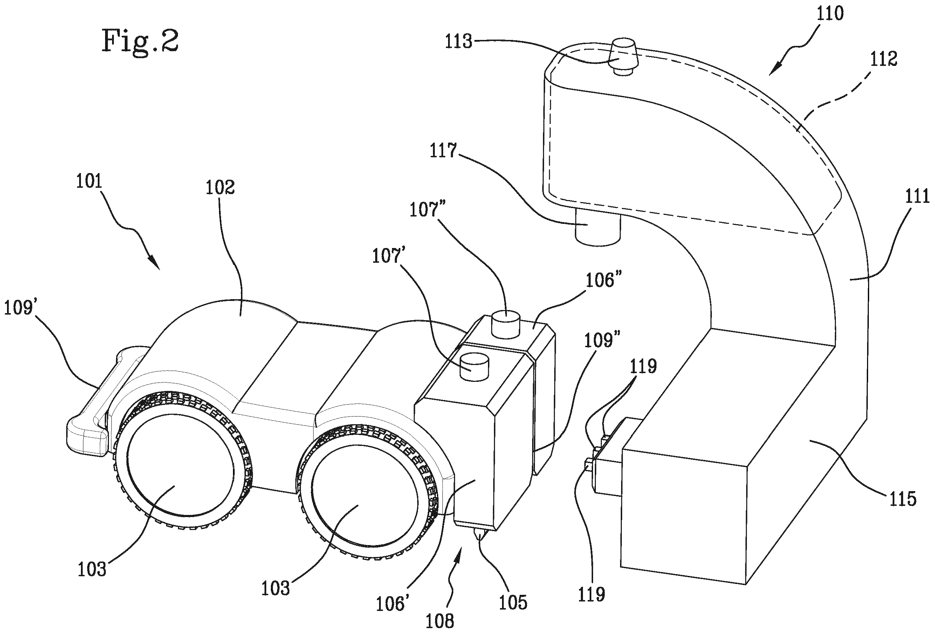

With reference to Figure 2, the robot 101 comprises a first and a second tank 106' and 106", mounted on a separate and autonomous trolley 108, pulled by the robot 101. Between the tanks 106' and 106" there are means (not illustrated and of per se known type) for mixing the substances contained in the respective tanks 106' and 106"'. Obviously, the tank 106' is connected to a first opening 107', whilst the second tank 106" is connected to a relative secondary supply opening 107".

The robot 1 or 101 is equipped with activation means for starting the refilling step at a suitable supply station 10 or 110. Said activation means comprise a programming logic of the control unit which firstly passes the robot 1 or 101 from a working step, wherein it is moved for cutting the grass and/or for dispensing the insecticide, disinfectant, herbicide or weed killing substance, to a step of refilling the substance to be dispensed.

The refilling station 10 or 110 comprises a column type body 11 or 111 designed to be fixed to the ground, and for supporting at least one container 12 or 112 of a substance to be dispensed, as a reserve substance, for refilling at least one tank 6 or 106' and/or 106" of the robot 1 or 101.

Each container 12 or 112 (shown by dashed lines in Figures 1 and 2 since it inside the column type body 11 and 111 respectively) has at least one supply inlet 13 or 113 and at least one valve 17 or 117 for dispensing the substance to be distributed, the latter controlled for opening and closing by the control unit using the activation means. This allows dispensing of the reserve substance in the opening 7 or 107' and/or 107" of the tank 6 or 106' and/or 106" when the robot 1 or 101 is in the refilling step, or if it is in the operating step, that is to say, moving for the cutting and/or the dispensing of the insecticide, disinfectant, herbicide or weed killing substance, the dispensing is prevented.

The container 12 or 112 is suspended from the ground and has its lower surface facing towards the ground raised from the ground by at least a height H equal to or greater than the height of the upper surface, that is to say, furthest from the ground, of the lawn mower robot 1 or 101, so as to facilitate the filling of the tank 6 or 106' and/or 106" by gravity.

Again in order to exploit the effect of gravity, the preferred embodiment contemplates that the inlet 13 or 113 is located above the valve 17 or 117, relative to the ground.

The robot 1 or 101 is also equipped with an ultrasonic vibrations device, interposed between the tank and the outfeed nozzle of the substance, for nebulising the substance to be dispensed, in such a way that it is dispensed in a nebulised form.

In this case, there are disc-shaped capsules, made of piezo-ceramic material, positioned at the base of the tank and which can be operated by a high-frequency alternating current circuit such as to emit ultrasonic waves.

These ultrasonic waves concentrate on the surface of the liquid, producing an ultrasonic "nozzle" which causes the emission of very small droplets from the cone of liquid at the tip.

The device generates an aerosol and comprises means for adjusting the aerosol by controlling the level of the electrical voltage, by the current circulating in the capsule and by modulating the pulse pause.

Normally, the frequency range typical of the capsules on the market ranges from 200 kHz to 3 MHz.

In the embodiment described here, the capsules are made to oscillate at 1.6 MHz. Droplets with dimensions of approximately 3-5µm are generated at this frequency.

Advantageously, the quantity of nebulised water is modulated in the following manner.

Firstly, during the start-up of the circuit, a search is performed for the resonance frequency of the capsule, which varies slightly from capsule to capsule.

This frequency is identified by varying the frequency around 1.6 MHz, for example with variations of +/-20 kHz around 1.6 MHz.

The resonance is then identified in the frequency corresponding to the maximum current recorded.

Starting from this data item, the operating frequency is positioned in the capacitive zone of the resonance bell (that is, beyond the frequency identified), attempting then to maintain a current circulating in the circuit (and in the capsule)which is constant, varying only the frequency.

In practice, varying the frequency, the current on the capsule is substantially always constant with the possibility of increasing or decreasing the quantity of liquid nebulised as desired and the nebulising is kept uniform during the entire operating time.

Together with the refilling of the substance to be dispensed, the Applicant understood that it is advantageous to simultaneously recharge the battery of the motor means of the robot 1 or 101.

For this purpose, the robots 1 and 101 each have at least one charging socket 9 and 109' and/or 109" (of per se known type), located on the front and/or rear part - relative to the normal feed direction - of the load-bearing frame 2 and 102, which allows the recharging of the motor means of the robots 1 and 101 thanks to the connection between the electric battery and a relative power supply unit (not illustrated) installed inside the station 10 and 110.

The sockets 9 and 109' and/or 109" are designed to be connected to respective charging means 19 and 119, of per se known type, for example with magnetic contact connected to the power supply unit.

A problem that the Applicant has addressed is linked to the actuation of the dispensing valve 17 and 117 during opening and closing, since the falling of the substance to be supplied in the opening 7 or 107' and/or 107" of the tank 6 or 106' and/or 106" must occur when the robot 1 or 101 is in the correct position at the appropriate moment.

For this purpose, the Applicant has overcome this technical problem by linking the opening (and the closing) of the dispensing valve 17 or 117 to the connection of the recharging means to the motor means of the robot 1 or 101, in such a way that the control unit opens (or closes) the valve 17 or 117 if the connection is established (or interrupted).

In practice, the control unit opens or closes the valve 17 (or 117) when it recognises that the electrical connection between the charging socket 9 (or 109' and/or 109) and the respective magnetic contact 19 (or 119) has occurred. In this way, the same control unit manages the system in such a way that when the socket 9 (or 109' and/or 109") is electrically connected to the magnetic contact 19 (or 119), the valve 17 (or 117) opens, dispensing the disinfectant, insecticide, herbicide or weed killer substance in the tank 6 or 106' and/or 106" whilst, vice versa, when the electrical socket connection 9 (109' and/or 109")/contact 19 (119) is cut, the valve 17 (or 117) closes, thus interrupting the dispensing of the substance.

Similarly, in order to prevent dirt, such as grass cuttings, leaves or powder, from entering the opening 7 or 107' and/or 107" in the tank 6 or 106' and/or 106" and cause damage, the opening 7 or 107' and/or 107" opens and closes when an electrical connection is established or cut between the electrical socket connection 9 or 109' and/or 109" and the magnetic contact 19 or 119.

For this purpose, advantageously, the distance L between the magnetic contact 19 or 119 and the dispensing valve 17 or 117 is such that at least one opening 7 or 107' and/or 107" of the tank 6 or 106' and/or 106", is substantially at the dispensing valve 17 or 107' and/or 107". for example, below (Figures 1 and 2) during refilling, so as to allow, in the open position of the valve 17 or 117, the introduction of the reserve substance into the same opening 7 or 107'.

In the example embodiment of Figure 1, the station 10 comprises a column type body 11 which has at the base a magnetic contact 19, connected to a supply unit inside the station 10, for the electrical connection of a socket 9 mounted on the front of the load-bearing frame 2 of the robot 1 which is equipped with a cutting blade 4, a geo-localising system and having a single tank 6, supplied from an opening 7, communicating with a dispenser 5 positioned at approximately 20 cm from the ground. The selection of the single tank is due to the fact that in this case the robot 1 is able to dispense a substance already mixed, for example an anti-mosquito product, which is stable in the medium to long-term.

The column type body 11 supports a container 12 for the anti-mosquito product to be supplied, provided with an inlet 13 for supplying from the outside and a dispensing valve 17 for the anti-mosquito product. The container 12 is suspended from the ground and has its lower surface (which faces towards the ground) raised from the ground by at least a height H equal to or greater than the height of the upper surface (that is to say, furthest away from the ground) of the robot 1.

The container 12 therefore comprises.

In order to facilitate the passage of the substance by gravity, the inlet 13 is defined on the upper part of the container, whilst the valve 17 is defined on the lower part.

When the level of the anti-mosquito product contained in the tank 6 of the robot 1 reaches a predetermined lower threshold value, alarm means indicate the "empty" status of the tank 6 to the control unit which activates for refilling. The control unit commands the movement means of the robot 1 to interrupt the programmed work and move towards the station 10 guided by the geolocation system.

The control unit of the robot 1 is programmed to open the valve 17 and the opening 7, when it recognises that the electrical connection is established between the socket 9 and the contact 19, thus allowing the refilling of the tank 6.

The refilling is completed when the means for detecting the level of the substance contained in the tank 6 indicate to the control unit that the substance has reached a predetermined upper threshold value, corresponding to the full status of the tank 6, and the control unit orders the opening 7 and the valve 17 to close and the robot 1 to restart the interrupted work program.

In the variant of Figure 2, the filling station 110 has a column type body 111 fixed to the ground and supporting the container 112 which is suspended from the ground in a similar manner to the station 10. The contact 119, in this case, is mounted on a box-shaped body 115, where there is an electrical power supply for recharging the robot 101, connected to the body 111.

The robot 101 in this case also has a socket 109' and/or 109" for the electrical recharging installed on the rear part of the frame 102, whilst as usual it is equipped with a cutting blade 104 and a geolocalising system (not illustrated).

Moreover, the robot 101 comprises two tanks 106' and 106", a first tank 106' containing the concentrated substance, for example a weed killer substance, connected to a first inlet opening 107' and a second tank 106" which contains a dilutant, for example water, connected to a second inlet opening 107".

The double tank is necessary in this situation because the weed killer substance selected is not stable over time, but must be dispensed in a limited time (a few hours) and must therefore be mixed each time; it is the control unit which performs the mixing in an extemporaneous manner, when the set programmed indicates the requirement.

For this reason, means (not illustrated) for mixing the two substances contained in the tanks 106' and 106" must be provided. The mixing means are connected to the control unit and are positioned upstream of the dispenser 105 which, in this variant embodiment, is installed under the trolley 108.

To prevent the user from providing the container 112 with frequent refills, the tank 106' containing the concentrate will certainly have a greater capacity than the tank 106" containing water.

This problem may also be overcome by considering the provision of two containers, with respective mixing means connected to the control unit, in another example of a refilling station, not illustrated, for supplying the type of robot 1.

The column type body 111 supports a container 112 for supplying the water, provided with an inlet 113 formed on the upper part of the container 112 for supplying from the outside and a dispensing valve 117 of the anti-mosquito product, defined on the lower part of the container 112. Also in this embodiment, the container 112 is suspended from the ground and has its lower surface raised from the ground by at least a height H equal to or greater than the height of the upper surface of the robot 101.

Similarly to that described above, when the water level contained in the second tank 106" of the robot 101 reaches a predetermined lower threshold value, alarm means signal the "empty" status of the tank 106" to the control unit which activates for refilling. The control unit then commands the means for moving the robot 101 to interrupt the programmed work and move towards the station 110 thanks to the geolocation system.

The control unit of the robot 101 thus sees that the socket 109' and/or 109" is electrically connected to the contact 119 and opens the valve 117 and the opening 107", allowing refilling of the tank 106".

In this case, too, the means for detecting the level of the substance contained in the tank 106" indicate to the control unit that the substance has reached a predetermined upper threshold value, corresponding to the "full" status and the control unit orders the opening 107" and the valve 117 to close and the robot 101 to restart the interrupted work programme.

In use, the lawn mower robot 1 (or 101) must be firstly set up and the user must record in the control unit the data relative to the zones where the substance or substances to be dispensed must be delivered, as well as the dispensing times (start, end and frequency).

As soon as this information has been entered and recorded, even with the aid of an Internet cloud, it geolocates the robot 1 (or 101), identifying one or more spraying areas.

At this point, the control unit commands the robot 1 (or 101) to move towards the first of the areas to be sprayed, actuating the motor means connected to the wheels 3 (or 103).

The nozzle 5 (or 105), controlled by the control unit, starts to distribute the substance to be dispensed simultaneously with the cutting of the grass and/or after cutting the lawn or garden.

If, during this working step, the means for detecting the level of the substance contained in the tank 6 (or 106' and 106") signals to the control unit that the substance is at the lower threshold level, the robot 1 (or 101) is ordered to interrupt the cutting and/or the dispensing and move towards the refilling station 10 (or 110).

The robot 1 (or 101) is programmed to move the socket 9 (or 109' and/or 109") towards the connector 19 (or 119) of the station 10 (or 110) and then to recharge.

The control unit "detects" the electrical connection between the socket 9 (or 109' and/or 109") and the connector 19 (or 119) and activates the refilling by opening both the dispensing valve 17 (or 117) and the opening 7 (or 107' and/or 107") of the tank 6 (or 106' and/or 106").

When the level of the solution is such as to reach the upper threshold level of the tank 6 (or 106' and/or 106"), the control unit closes the valve 17 (or 117) and the opening 7 (or 107' and/or 107") and the robot 1 (or 101), detached from the recharging means, restarts the working step from where it was interrupted.

From the above description it may be seen how the invention achieves the preset purpose and aims and in particular the fact should be noted that a motor-driven lawn mower robot is made, which is able to dispense an insecticide, a weed killer or even a herbicide, in the most homogeneous manner possible in the lawn or in the garden, with an improved flexibility of use.

In particular, having conceived the installation of means for dispensing the substances to be sprayed on the lawn mower robot used for mowing a lawn or a garden, on the one hand it allows an evident saving in terms of costs, since the owner of the lawn or garden is not forced to purchase and install other systems or apparatuses for weed killing and disinfection, and on the other hand it allows a very uniform and focussed spreading of the substance to be dispensed.

Another advantage of the invention is due to the fact that, with the aid of the robot, it avoids an annoying dismantling and reassembling of the fixed systems, thus avoiding lengthy times and high costs.

Another advantage of the invention is due to the refilling point which allows the robot to move more easily and the user to save on the raw material of the solution to be dispensed, using concentrated formulas to be diluted with water.

Moreover, the automatic refilling system prevents the user from manually controlling and refilling the tanks of the robot, allowing an improved efficiency.

Lastly, the use of means which are easily available on the market or made economically and the use of common materials makes the device economically competitive.

## Claims

1. A motor-driven lawn mower robot (1, 101) comprising, on a load-bearing frame (2, 102):
movement means (3, 103) powered by motor means by connecting to a control unit;
grass cutting means (4, 104);
at least one nozzle (5, 105) for supplying a substance to be distributed on a predetermined spraying area connected to at least one containment tank (6, 106', 106") for a first substance to be dispensed and controlled by said control unit;
at least one supply outlet (7, 107', 107") for supplying said tank (6, 106', 106"); and
a geolocation system designed to record data relative to the zones where to deliver the substance to be dispensed, in such a way that the control unit, depending on said data recorded and the geolocation information, activates the distribution of the substance to be dispensed at the end of or during the step for cutting the grass;
means for nebulising the substance to be dispensed, in such a way that the substance dispensed is in a nebulised form,
the nebulising means comprising an ultrasonic vibrations device interposed between said tank (6, 106', 106") and said nozzle (4, 104);
**characterised in that** said ultrasonic vibrations device comprises capsules made of piezoelectric material positioned at the base of said tank (6, 106', 106") and which can be actuated by a high-frequency circuit.

2. The robot (1, 101) according to claim 1, wherein said control unit is programmable in such a way as to set up the predetermined spraying area and/or the frequency of distribution of the substance to be dispensed.

3. The robot (101) according to any one of the preceding claims, comprising a first tank (106') and at least a second tank (106") respectively for containing a first substance to be dispensed and a second substance to be dispensed, connected to a relative first supply opening (107') and to a second supply opening (107") and to at least one outfeed nozzle for said first substance to be dispensed or aid second substance to be dispensed or a mixture of the first and substances to be dispensed.

4. The robot (101) according to claim 3, comprising means for mixing the substances contained inside said first tank (106') and said second tank (106"), said mixing means being connected to the control unit and being positioned upstream of said dispenser (105).

5. The robot (1, 101) according to any one of the preceding claims, wherein at least said tank (6, 106', 106") is mounted on a trolley (108) which is separate and autonomous, pulled by the motor-driven lawn mower robot (1, 101).

6. The robot (1, 101) according to any one of the preceding claims, comprising means for detecting the level of the substance contained at least in said tank (6, 106', 106") and connected to said control unit.

7. The robot (1, 101) according to any one of the preceding claims, comprising means for activating a refilling station (10, 110) which can be operated by said control unit, in such a way that the robot (1, 101) passes from a working step, wherein it is moved for cutting and/or dispensing the substance, to a step of refilling the substance to be dispensed.

8. A method for dispensing an insecticide, herbicide or weed killer substance in a gas, liquid or solid form, comprising the steps of:
- setting up and recording, on a control unit of a motor-driven lawn mower robot (1, 101) data relative to the zones where the substance to be dispensed is to be dispensed,
- geolocating the robot (1, 101) by means of a geolocation system mounted on a load-bearing frame (2, 102) of the robot (1, 101), in such a way as to identify a spraying area,
- moving the robot (1, 101) towards the predetermined spraying area identified in this way, by movement means (3, 103) connected to said load-bearing frame (2, 102) and powered by motor means controlled by said control unit, and
- distributing the substance to be dispensed in a nebulised form using nebulising means in the predetermined spraying area using an outfeed nozzle (5, 105) for the substance to be dispensed, said nozzle (5, 105) being connected to at least one tank (6, 106', 106") defined in said load-bearing frame (2, 102) and being controlled by said control unit.
**characterised in that** the nebulising means comprise an ultrasonic vibrations device, interposed between said tank (6, 106', 106") and said nozzle (4, 104), for actuating, by means of a high-frequency circuit, capsules made of piezoelectric material, in said ultrasonic vibrations device, positioned at the base of said tank (6, 106', 106") positioned in said ultrasonic vibrations device.

9. A process for nebulising a fluid dispensed by a robot (1, 101) according to any one of claims 1 to 7, comprising the following steps:
- performing a search for the resonance frequency of the capsule during the starting of the high frequency alternating current circuit which generates the emission of ultrasonic waves,
- keeping a current circulating in the circuit which is substantially constant, varying only said resonance frequency,
- increasing or decreasing the quantity of nebulised fluid as desired during use.

10. The process according to claim 9, wherein said resonance frequency is identified by varying the frequency around a predetermined operating frequency, in such a way that the resonance is identified in the frequency corresponding to the maximum current recorded.

## Patentansprüche

1. Motorisch angetriebener Rasenmäherroboter (1, 101), umfassend auf einem lasttragenden Rahmen (2, 102):
Bewegungsmittel (3, 103), die von Motormitteln durch die Verbindung mit einer Steuereinheit versorgt werden;
Grasschneidemittel (4, 104);
mindestens eine Düse (5, 105) zum Zuführen einer Substanz, die auf einem vorgegebenen Sprühbereich auszubringen ist, die mit mindestens einem Enthaltetank (6, 106', 106") für eine erste auszugebende Substanz verbunden ist und von der Steuereinheit gesteuert wird;
mindestens einen Zuführungsauslass (7, 107', 107") zum Versorgen des Tanks (6, 106', 106") und
ein Geolokalisierungssystem, das ausgelegt ist, um Daten in Bezug auf die Zonen, denen die auszugebende Substanz zuzuführen ist, aufzuzeichnen, sodass die Steuereinheit abhängig von den aufgezeichneten Daten und den Geolokalisierungsinformationen die Ausbringung der auszugebenden Substanz am Ende oder während des Schritts zum Schneiden des Grases aktiviert;
Mittel zum Vernebeln der auszugebenden Substanz, sodass die ausgegebene Substanz eine vernebelte Form aufweist, wobei die Vernebelungsmittel eine Ultraschallvibrationsvorrichtung umfassen, die zwischen dem Tank (6, 106', 106") und der Düse (4, 104) eingesetzt ist,
**dadurch gekennzeichnet, dass** die Ultraschallvibrationsvorrichtung Kapseln aus piezoelektrischem Material umfasst, die an der Basis des Tanks (6, 106', 106") positioniert und durch einen Hochfrequenzkreislauf betätigt werden können.

2. Roboter (1, 101) nach Anspruch 1, wobei die Steuereinheit so programmierbar ist, dass der vorgegebene Sprühbereich und/oder die Ausbringungshäufigkeit der auszugebenden Substanz festgelegt werden.

3. Roboter (101) nach einem der vorhergehenden Ansprüche, umfassend einen ersten Tank (106') und mindestens einen zweiten Tank (106") jeweils zum Enthalten einer ersten auszugebenden Substanz und einer zweiten auszugebenden Substanz, verbunden mit einer jeweiligen ersten Zuführungsöffnung (107') und einer zweiten Zuführungsöffnung (107") und mit mindestens einer Auslassdüse für die erste auszugebende Substanz oder die zweite auszugebende Substanz oder eine Mischung der ersten und der zweiten auszugebenden Substanz.

4. Roboter (101) nach Anspruch 3, umfassend Mittel zum Mischen der im ersten Tank (106') und im zweiten Tank (106") enthaltenen Substanzen, wobei die Mischmittel mit der Steuereinheit verbunden und vor der Ausgabevorrichtung (105) positioniert sind.

5. Roboter (1, 101) nach einem der vorhergehenden Ansprüche, wobei mindestens der Tank (6, 106', 106") auf einem Transportwagen (108) montiert ist, der separat und autonom ist und vom motorisch angetriebenen Rasenmäherroboter (1, 101) gezogen wird.

6. Roboter (1, 101) nach einem der vorhergehenden Ansprüche, umfassend Mittel zum Erkennen des Pegels der mindestens im Tank (6, 106', 106") enthaltenen Substanz, die mit der Steuereinheit verbunden sind.

7. Roboter (1, 101) nach einem der vorhergehenden Ansprüche, umfassend Mittel zum Aktivieren einer Nachfüllstation (10, 110), die von der Steuereinheit betätigt werden kann, sodass der Roboter (1, 101) von einem Arbeitsschritt, in dem er bewegt wird, um zu schneiden und/oder die Substanz auszugeben, zu einem Schritt wechselt, um die auszugebende Substanz nachzufüllen.

8. Verfahren zum Ausgeben einer Insektenschutz-, Pflanzenschutz- oder Unkrautvernichtungssubstanz in einer gasförmigen, flüssigen oder festen Form, umfassend die folgenden Schritte:
- Einstellen und Aufzeichnen von Daten in Bezug auf die Zonen, in denen die auszugebende Substanz auszugeben ist, in einer Steuereinheit eines motorisch angetriebenen Rasenmäherroboters (1, 101);
- Geolokalisieren des Roboters (1, 101) mittels eines Geolokalisierungssystems, das auf einem lasttragenden Rahmen (2, 102) des Roboters (1, 101) montiert ist, sodass ein Sprühbereich identifiziert wird;
- Bewegen des Roboters (1, 101) hinführend zum vorgegebenen, auf diese Weise identifizierten Sprühbereich durch Bewegungsmittel (3, 103), die mit dem lasttragenden Rahmen (2, 102) verbunden sind und von Motormitteln versorgt werden, die von der Steuereinheit gesteuert werden, und
- Ausbringen der auszugebenden Substanz in einer vernebelten Form unter Nutzung von Vernebelungsmitteln im vorgegebenen Sprühbereich unter Nutzung einer Auslassdüse (5, 105) für die auszugebende Substanz, wobei die Düse (5, 105) mit dem mindestens einen Tank (6, 106', 106") verbunden ist, definiert im lasttragenden Rahmen (2, 102) und gesteuert von der Steuereinheit,
**dadurch gekennzeichnet, dass** die Vernebelungsmittel eine Ultraschallvibrationsvorrichtung umfassen, die zwischen dem Tank (6, 106', 106") und der Düse (4, 104) eingesetzt ist, um mittels eines Hochfrequenzkreislaufs Kapseln aus piezoelektrischem Material in der Ultraschallvibrationsvorrichtung zu betätigen, die an der Basis des Tanks (6, 106', 106") positioniert sind, der in der Ultraschallvibrationsvorrichtung positioniert ist.

9. Verfahren zum Vernebeln eines von einem Roboter (1, 101) nach einem der Ansprüche 1 bis 7 ausgegebenen Mediums, umfassend die folgenden Schritte:
- Durchführen einer Suche der Resonanzfrequenz der Kapsel während des Startens des Hochfrequenzwechselstromkreislaufs, die die Emission von Ultraschallwellen generiert;
- Aufrechterhalten eines im Kreislaufs fließenden Stroms, der im Wesentlichen konstant ist, wobei nur die Resonanzfrequenz variiert;
- Erhöhen oder Verringern der Menge von vernebeltem Medium je nach Wunsch während der Nutzung.

10. Verfahren nach Anspruch 9, wobei die Resonanzfrequenz durch das Variieren der Frequenz rund um eine vorgegebene Betriebsfrequenz identifiziert ist, sodass die Resonanz in der Frequenz identifiziert wird, die dem maximalen aufgezeichneten Strom entspricht.

## Revendications

1. Robot tondeuse à gazon entraîné par moteur (1, 101), comprenant, sur un cadre porteur (2, 102) :
des moyens de déplacement (3, 103) alimentés par des moyens moteurs par connexion à une unité de commande ;
moyens de coupe d'herbe (4, 104) ;
au moins une buse (5, 105) pour fournir une substance à distribuer sur une zone de pulvérisation prédéterminée reliée à au moins un réservoir de contenance (6, 106', 106") pour une première substance à distribuer et à commander par ladite unité de commande ;
au moins une sortie d'alimentation (7, 107', 107") pour alimenter ledit réservoir (6, 106', 106") ; et
un système de géolocalisation conçu pour enregistrer des données relatives aux zones où délivrer la substance à distribuer, de telle sorte que l'unité de commande, en fonction desdites données enregistrées et des informations de géolocalisation, active la distribution de la substance à distribuer à la fin ou pendant l'étape de coupe de l'herbe ;
des moyens de nébulisation de la substance à distribuer, de telle sorte que la substance distribuée soit sous forme nébulisée,
les moyens de nébulisation comprenant un dispositif de vibrations ultrasonores interposé entre ledit réservoir (6, 106', 106") et ladite buse (4, 104) ;
**caractérisé en ce que** ledit dispositif de vibrations ultrasonores comprend des capsules faites en matériau piézoélectrique positionnées à la base dudit réservoir (6, 106', 106") et qui peuvent être actionnées par un circuit haute fréquence.

2. Robot (1, 101) selon la revendication 1, dans lequel ladite unité de commande est programmable de manière à établir la zone de pulvérisation prédéterminée et/ou la fréquence de distribution de la substance à distribuer.

3. Robot (101) selon l'une quelconque des revendications précédentes, comprenant un premier réservoir (106') et au moins un second réservoir (106") respectivement pour contenir une première substance à distribuer et une seconde substance à distribuer, reliés à une première ouverture d'alimentation relative (107') et à une seconde ouverture d'alimentation (107") et à au moins une buse de sortie pour ladite première substance à distribuer ou aider la seconde substance à distribuer ou un mélange de la première et des substances à distribuer.

4. Robot (101) selon la revendication 3, comprenant des moyens pour mélanger les substances contenues à l'intérieur dudit premier réservoir (106') et dudit second réservoir (106"), lesdits moyens de mélange étant connectés à l'unité de commande et étant positionnés en amont dudit distributeur (105).

5. Robot (1, 101) selon l'une quelconque des revendications précédentes, dans lequel au moins ledit réservoir (6, 106', 106") est monté sur un chariot (108) qui est séparé et autonome, tiré par le robot tondeuse à gazon entraîné par moteur (1, 101).

6. Robot (1, 101) selon l'une quelconque des revendications précédentes, comprenant des moyens pour détecter le niveau de la substance contenue au moins dans ledit réservoir (6, 106', 106") et connectés à ladite unité de commande.

7. Robot (1, 101) selon l'une quelconque des revendications précédentes, comprenant des moyens pour activer une station de remplissage (10, 110) qui peut être actionnée par ladite unité de commande, de telle sorte que le robot (1, 101) passe d'une étape de travail, dans laquelle il est déplacé pour couper et/ou distribuer la substance, à une étape de remplissage de la substance à distribuer.

8. Procédé de distribution d'un insecticide, d'un herbicide ou d'une substance désherbante sous forme gazeuse, liquide ou solide, comprenant les étapes de :
- mettre en place et enregistrer, sur une unité de commande d'un robot tondeuse à gazon entraîné par moteur (1, 101), des données relatives aux zones où la substance à distribuer doit être distribuée,
- géolocaliser le robot (1, 101) au moyen d'un système de géolocalisation monté sur un cadre porteur (2, 102) du robot (1, 101), de manière à identifier une zone de pulvérisation,
- déplacer le robot (1, 101) vers la zone de pulvérisation prédéterminée ainsi identifiée, par des moyens de déplacement (3, 103) reliés audit cadre porteur (2, 102) et alimentés par des moyens moteurs commandés par ladite unité de commande, et
- distribuer la substance à distribuer sous forme nébulisée à l'aide de moyens de nébulisation dans la zone de pulvérisation prédéterminée à l'aide d'une buse de sortie (5, 105) de la substance à distribuer, ladite buse (5, 105) étant reliée à au moins un réservoir (6, 106', 106") défini dans ledit cadre porteur (2, 102) et étant commandé par ladite unité de commande,
**caractérisé en ce que** les moyens de nébulisation comprennent un dispositif de vibrations ultrasonores, interposé entre ledit réservoir (6, 106', 106") et ladite buse (4, 104), pour actionner, au moyen d'un circuit haute fréquence, des capsules en matériau piézoélectrique, dans ledit dispositif de vibrations ultrasonores, positionnées à la base dudit réservoir (6, 106', 106") positionné dans ledit dispositif de vibrations ultrasonores.

9. Procédé de nébulisation d'un fluide distribué par un robot (1, 101) selon l'une quelconque des revendications 1 à 7, comprenant les étapes suivantes :
- effectuer une recherche de la fréquence de résonance de la capsule lors du démarrage du circuit de courant alternatif haute fréquence qui génère l'émission d'ondes ultrasonores,
- maintenir un courant circulant dans le circuit sensiblement constant, ne faisant varier que ladite fréquence de résonance,
- augmenter ou diminuer la quantité de liquide nébulisé comme souhaité pendant l'utilisation.

10. Procédé selon la revendication 9, dans lequel ladite fréquence de résonance est identifiée en faisant varier la fréquence autour d'une fréquence de fonctionnement prédéterminée, de telle sorte que la résonance est identifiée dans la fréquence correspondant au courant maximum enregistré.
